# FASCICULE DE BREVET EUROPEEN

(11) **EP 2 525 071 B1**
(45) Date de publication et mention de la délivrance du brevet: **23.10.2013**
(21) Numéro de dépôt: 12290157.2
(22) Date de dépôt: 09.05.2012
(51) Int. Cl.: F23R 7/00, F02K 7/08, F02K 9/62, F23R 3/42

(54) **Moteur à onde de détonation continue et engin volant pourvu d'un tel moteur**
Motor mit kontinuierlicher Detonationswelle und Fluggerät mit einem solchen Motor
Continuous detonation wave engine and aircraft provided with such an engine

(30) Priorité: 16.05.2011 FR 1101484
(43) Date de publication de la demande: 21.11.2012
(73) Titulaire: MBDA France, 75016 Paris (FR)
(72) Inventeur: Falempin, François, 78370 Saint Arnoult (FR)
(74) Mandataire: Hauer, Bernard

(56) Documents cités:
- US-A1- 2010 050 592
- F. Falempin: "Continuous Detonation Wave Engine" In: "Advances on Propulsion Technology for High-Speed Aircraft", 1 janvier 2008 (2008-01-01), RTO, Neuilly-sur-Seine, France, XP002668632, vol. 8, pages 8-1-8-16, * le document en entier *
- FALEMPIN F ET AL: "R&T effort on pulsed and continuous detonation wave engines", 16TH AIAA/DLR/DGLR INTERNATIONAL SPACE PLANES AND HYPERSONIC SYSTEMS AND TECHNOLOGIES CONFERENCE 2009, 2009, pages 1-15, XP002668633, AMERICAN INSTITUTE OF AERONAUTICS AND ASTRONAUTIC

## Description

La présente invention concerne un moteur à onde de détonation continue fonctionnant avec un mélange combustible/oxydant détonant, ainsi qu'un engin volant qui est pourvu d'un tel moteur.

On sait que la quasi-totalité des systèmes propulsifs utilisés dans le domaine de l'aéronautique et de l'espace sont basés sur un cycle thermodynamique de combustion à pression constante.

On sait également que l'emploi d'un cycle thermodynamique de combustion à volume constant permet d'augmenter sensiblement la performance théorique d'un moteur (de 15 à 25%). Cependant, en raison des vitesses de déplacement de la plupart des aéronefs, la réalisation d'une combustion à volume constant s'avère assez difficile et conduit à des systèmes complexes et difficiles à mettre au point.

L'emploi d'un cycle thermodynamique de détonation peut apporter les mêmes avantages en termes d'efficacité énergétique. En effet, un cycle de détonation est très proche d'un cycle à volume constant (la réaction se fait très rapidement dans une épaisseur très faible de mélange qui n'a pas la possibilité temporelle de se dilater pour limiter l'augmentation de pression) et correspond à un rendement thermodynamique encore un peu meilleur.

Comme moteur à détonation, on connaît un moteur à détonation pulsée de type PDE (« Pulsed Detonation Engine » en anglais), pour lequel on remplit un tube, fermé à l'une de ses extrémités, avec un mélange frais combustible/oxydant, puis on initie une détonation dans ce mélange frais. Pendant tout le temps que l'onde de détonation se déplace sur la longueur du tube, une surpression existe sur l'extrémité fermée et crée momentanément une poussée. Il faut alors attendre la vidange des gaz chauds issus de la réaction chimique dans le tube, puis son remplissage en mélange frais, avant de pouvoir initier une nouvelle onde de détonation et obtenir une nouvelle impulsion de poussée.

La nature pulsée de la poussée (fonctionnement de 50 à 200 Hz) génère un environnement vibratoire très sévère pour le reste de l'engin et, de plus, nécessite d'apporter de l'énergie à chaque cycle pour initier la détonation, ce qui peut constituer un problème majeur d'efficacité globale quand on cherche à utiliser des couples combustible/comburant peu détonants. Ces caractéristiques limitent son emploi à des applications très particulières (par exemple des systèmes subsoniques simples et peu chers) ou à des systèmes très complexes associant plusieurs tubes de type PDE.

Pour remédier au problème de l'environnement vibratoire très sévère généré, a priori, par un moteur à détonation pulsée, on peut utiliser un moteur à détonation continue de type CDWE (« Continuous Detonation Wave Engine » en anglais). Dans un tel moteur à détonation continue, on génère dans une chambre annulaire une production continue de gaz chauds issus d'ondes de détonation auto-entretenues. Un mélange combustible/oxydant est injecté de façon permanente à l'une des extrémités de la chambre annulaire. On amorce alors une onde de détonation. Cette onde se propage de façon circonférentielle dans le mélange détonant frais, tandis que les gaz chauds qu'elle produit se détendent dans le reste de la chambre annulaire. Comme l'injection de mélange frais est permanente, lorsque l'onde revient à son point de départ, elle rencontre à nouveau du mélange frais et poursuit son mouvement circonférentiel qui devient donc continu.

On dispose ainsi d'une chambre annulaire dans laquelle une série d'ondes de détonation circonférentielles, défilant à une fréquence de plusieurs kHz (jusqu'à 30 kHz), produit des gaz chauds qui se détendent vers l'extrémité ouverte de la chambre. On a donc, comme pour une chambre de combustion à pression constante, un générateur de gaz chauds qui constituent, dès la sortie de la chambre de détonation, un écoulement supersonique dont les caractéristiques sont relativement uniformes.

L'intérêt de ce moteur de type CDWE réside dans le fait que, du point de vue du cycle thermodynamique, la détonation présente potentiellement (comme pour un moteur PDE) un rendement de 1 5 à 25 % supérieur à celui d'une combustion à pression constante. De plus, son principe de fonctionnement évite la génération d'un environnement vibratoire très sévère, comme pour un moteur PDE à détonation pulsée.

Toutefois, les applications de ce moteur à détonation continue de type CDWE, sont limitées par l'utilisation d'une forme globalement annulaire fermée de la chambre de détonation. En effet, cette chambre annulaire comprend à l'extrémité amont une surface transversale (appelée fond d'injection ci-après) qui représente une forme en anneau, c'est-à-dire de largeur constante et dont la longueur est définie selon une ligne générale formant une courbe fermée, généralement un cercle fermé. Or, les performances maximales ne peuvent être atteintes que dans une plage relativement étroite de conditions locales de fonctionnement (notamment de richesse du mélange combustible/comburant). Dès lors, il est difficile de concevoir une chambre annulaire fonctionnant dans un très large domaine d'emploi tout en respectant en tout point de cette chambre les conditions requises pour obtenir une efficacité énergétique satisfaisante.

Un moteur à détonation continue selon l'art antérieur est connu du document US 2010/050592 A1.

La présente invention a pour objet de perfectionner le moteur à détonation continue précité en remédiant notamment à ces inconvénients.

A cet effet, selon l'invention, ledit moteur à onde de détonation continue qui fonctionne avec un mélange combustible/oxydant détonant et qui comporte :
- au moins une chambre de détonation ;
- un système d'injection pour injecter de façon continue le mélange détonant dans ladite chambre de détonation au niveau d'une extrémité amont, ladite chambre de détonation comprenant un fond d'injection à ladite extrémité amont, ainsi que deux parois qui s'étendent de part et d'autre de ce fond d'injection ; et
- des moyens d'amorçage qui sont agencés dans ladite chambre de détonation, pour amorcer dans le mélange détonant, une onde de détonation qui se propage alors dans ledit mélange et est à l'origine d'ondes de détonation successives auto-initiées, de manière à générer une production continue de gaz chauds,
est remarquable en ce que ladite chambre de détonation comprend un fond d'injection dont la longueur est définie selon une ligne ouverte, de manière à former une chambre de détonation présentant une forme allongée dans un plan transversal, et en ce que ledit système d'injection est agencé de manière à injecter le mélange combustible/oxydant dans ladite chambre de détonation au niveau d'au moins un tronçon dudit fond d'injection. Ce système d'injection notamment est formé de manière à générer (conjointement avec l'onde amorcée par les moyens d'amorçage) des conditions locales particulières, qui permettent de créer dans la chambre de détonation ledit train d'ondes de détonation (amorcées naturellement).

Ainsi, grâce à l'invention, on obtient un moteur à onde de détonation continue qui comporte une chambre de détonation qui ne présente pas (et n'est pas limitée à) une forme annulaire (fermée), mais peut présenter de multiples autres formes différentes (ouvertes), précisées ci-dessous.

Cette chambre de détonation comprend, en effet, un fond d'injection amont allongé qui peut présenter une longueur de forme ouverte quelconque, en particulier rectiligne ou courbe, mais non fermée à la différence d'une chambre annulaire. Cette chambre comprend de plus deux parois, de préférence parallèles, qui s'étendent de part et d'autre de ce fond d'injection. Ladite chambre présente ainsi une forme géométrique à trois dimensions ayant des faces (planes ou non) qui se rencontrent au niveau d'arêtes. Ladite chambre peut, notamment, présenter la forme d'un hexaèdre (polyèdre à six faces planes) quelconque, et en particulier d'un parallélépipède (hexaèdre à faces parallèles deux à deux). Dans le cas d'un fond d'injection rectangulaire qui est donc défini selon une ligne droite, la chambre peut par exemple prendre la forme générale d'un parallélépipède rectangle (dont toutes les faces sont des rectangles).

Grâce à la multitude de formes envisageables de la chambre de détonation, conforme à l'invention, on augmente considérablement les applications possibles dudit moteur, par rapport à un moteur usuel à chambre de détonation annulaire, et on est en mesure de remédier aux inconvénients précités, comme précisé ci-dessous.

On notera que, dans la chambre de détonation, en aval de l'onde de détonation initiale (qui est initiée par les moyens d'amorçage), une couche de mélange frais (injectée par le système d'injection) qui, parce qu'elle est en contact avec les gaz chauds et sous des conditions particulières susceptibles d'être définies (notamment de façon empirique), va donner lieu à une nouvelle onde de détonation auto-initiée. Selon l'invention, ledit train d'ondes de détonation successives (auto-initiées, c'est-à-dire amorcées naturellement) dans la chambre de détonation le long du fond d'injection est donc obtenue grâce à la génération (par l'onde précédente et le système d'injection) de conditions locales permettant, à chaque fois, un amorçage automatique. Au-delà de la zone d'injection, le long du fond d'injection, l'onde de détonation dégénère en une simple onde de compression.

Dans le cadre de la présente invention, les extrémités de la chambre de détonation (à chaque bout du fond d'injection) peuvent être ouvertes ou fermées, indépendamment l'une de l'autre, et l'initiation (mise en oeuvre par lesdits moyens d'amorçage) peut être située n'importe où le long du fond d'injection de la chambre.

En raison des caractéristiques spécifiques précitées de la présente invention, de nombreuses applications peuvent être envisagées, notamment pour des moteurs fusées à ergols liquides, des systèmes à turbomachine ou encore des statoréacteurs.

Dans un mode de réalisation particulier, ledit système d'injection est susceptible de réaliser l'injection sur une longueur variable le long dudit fond d'injection, ce qui permet d'obtenir les avantages suivants :
- une possibilité de fonctionnement optimal sur une large plage de niveau de poussée demandée (pour une application statoréacteur) ou de richesse totale (pour une application turbomachine) : on alimente une part plus ou moins importante de longueur de chambre et le reste est seulement alimenté par le comburant (air a priori) ; et
- une limitation du choc de démarrage et une montée progressive en régime.

De plus, dans ce cas, si on monte deux moteurs de ce type sur un engin volant de manière à générer des propulsions respectivement de part et d'autre d'un axe de rotation de ce dernier, on peut engendrer une rotation de l'engin volant autour de cet axe à partir d'une injection dissymétrique. A titre d'illustration, on peut monter un tel moteur sur chacune des ailes d'un avion, le fond d'injection étant défini à chaque fois le long du bord de fuite de l'aile correspondante, et créer un moment de lacet en réalisant des injections différentes sur ces deux moteurs. On peut ainsi créer une aide au contrôle de l'engin par modulation d'injection dissymétrique.

En outre, le moteur peut, avantageusement, comprendre au moins un circuit de refroidissement de ladite chambre de détonation, dans lequel peut circuler du combustible avant son injection dans cette dernière. De préférence, ledit circuit de refroidissement s'étend le long d'au moins une paroi latérale de ladite chambre de détonation, sur au moins une partie de sa longueur.

Ainsi, on peut refroidir la chambre de détonation à l'aide d'une partie ou de l'intégralité du combustible avant de l'injecter dans ladite chambre. Cela permet d'assurer la tenue thermique de la chambre de détonation tout en vaporisant au moins une partie du combustible à injecter au cours de sa circulation dans ledit circuit. Une injection directe du combustible prévaporisé garantit l'initiation et la stabilité de la détonation du mélange détonant combustible-air. On prévient également des problèmes liés aux délais d'évaporation des gouttes de combustibles et de réaction chimique.

En outre, dans un mode de réalisation particulier, ladite chambre de détonation présente au niveau du fond d'injection une bifurcation permettant de créer, au-delà de cette dernière, au moins deux branches allongées, dont chacune est alimentée en mélange détonant par ledit système d'injection, ce qui permet de créer deux lignes propulsives par propagation des ondes dans les deux branches.

Dans ce cas, avantageusement, ledit système d'injection peut être formé de manière à alimenter chacune de ces branches sur une longueur plus ou moins importante et offrir ainsi une possibilité de contrôle (poussée vectorielle) de l'engin volant équipé dudit moteur.

De plus, dans un mode de réalisation particulier, ledit moteur comporte, en plus de ladite chambre à bifurcation, une chambre de détonation annulaire, et ladite chambre à bifurcation est reliée à ladite chambre annulaire de manière à obtenir une chambre hybride. Ce mode de réalisation particulier combine ainsi les avantages d'une chambre annulaire (stabilité assurée du fonctionnement) et ceux d'une chambre à bifurcation :
- fonctionnement optimal sur une large plage de conditions (poussée/richesse) : on alimente une part plus ou moins importante de longueur de chambre et le reste est seulement alimenté par le comburant (air a priori) ;
- limitation du choc de démarrage : on démarre uniquement la chambre annulaire ; et
- propulsion distribuée (et contrôle distribué).

En outre, dans un mode de réalisation particulier, ladite chambre hybride prend la forme d'une chambre de détonation annulaire, qui est pourvue d'extensions (ou de branches) concentriques à longueurs d'alimentation variables. Ces extensions concentriques peuvent être agencées à l'intérieur de ladite chambre de détonation annulaire ou à l'extérieur de cette dernière. Il est alors aisé de moduler la poussée de façon continue, en alimentant une longueur plus ou moins importante des extensions en combustible (ou en combustible et comburant pour un système fusée). De la même façon, on peut assurer facilement un contrôle de l'orientation de la poussée (pour un statoréacteur ou une fusée).

La présente invention concerne également un système propulsif (par exemple de type statoréacteur, turbomachine ou fusée) pour un engin volant, qui est pourvu d'au moins un moteur à onde de détonation continue, tel que celui précité.

Dans un mode de réalisation particulier, ce système propulsif est pourvu d'au moins deux moteurs de ce type, dont chacun comprend un système d'injection susceptible de moduler l'injection. On peut ainsi générer une modulation d'injection dissymétrique qui permet de contribuer au contrôle de l'engin volant.

La présente invention concerne en outre un engin volant, en particulier un avion ou un missile, qui est pourvu d'un moteur et/ou d'un système propulsif, tels que ceux précités.

La présente invention peut également être appliquée à un système de génération d'énergie qui est installé au sol, en particulier une turbine à gaz, qui est pourvu d'au moins un moteur à onde de détonation continue, tel que celui précité.
Les figures du dessin annexé feront bien comprendre comment l'invention peut être réalisée. Sur ces figures, des références identiques désignent des éléments semblables.
Les figures 1 et 2 sont des vues très schématiques, en perspective, d'un moteur à onde de détonation continue conforme à l'invention, respectivement pour deux formes différentes de la chambre de détonation.
La figure 3 est une vue schématique, en perspective, d'un mode de réalisation particulier d'un moteur conforme à l'invention, comprenant une chambre de détonation à bifurcation.
La figure 4 est une vue schématique de dessus de la figure 3.
La figure 5 est une vue schématique d'un mode de réalisation particulier d'un moteur conforme à l'invention, comprenant une chambre hybride.
Les figures 6 et 7 sont des vues schématiques de modes de réalisation d'un moteur à chambre hybride, comprenant respectivement des extensions internes et des extensions externes.

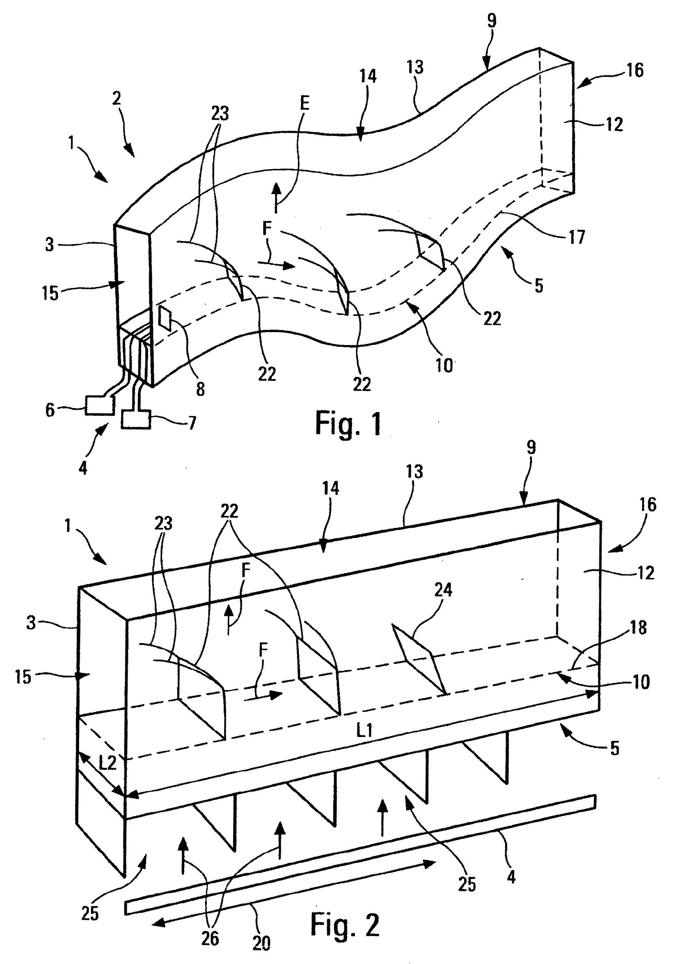

Le moteur 1 conforme à l'invention et représenté schématiquement sur la figure 1 est un moteur à onde de détonation continue et fait partie d'un système propulsif 2 destiné à être utilisé dans le domaine de l'aéronautique et/ou de l'espace, en étant monté sur un engin volant.

De façon usuelle, ce moteur à onde de détonation continue 1 fonctionne avec un mélange détonant de combustible et d'oxydant (notamment de l'air) et comporte de façon usuelle :
- au moins une chambre de détonation 3 ;
- un système d'injection 4 pour injecter de façon continue les composants (combustible, oxydant) dudit mélange détonant dans ladite chambre de détonation 3 au niveau d'une extrémité amont 5. Ces composants peuvent provenir de moyens de stockage 6 et 7 usuels ; et
- des moyens d'amorçage 8 qui sont représentés très schématiquement. Ces moyens d'amorçage 8 usuels (par exemple un fil à exploser ou un tube de pré-détonation) sont agencés dans ladite chambre de détonation 3 dans le but d'amorcer dans le mélange détonant, une onde de détonation qui se propage alors dans ledit mélange et est à l'origine d'ondes de détonation successives auto-initiées, de manière à générer une production continue de gaz chauds, s'échappant de la chambre 3 par une extrémité aval 9 ouverte.

On notera que, dans la présente description, les notions de amont et aval sont définies par rapport au sens E d'écoulement général des gaz.

Selon l'invention, ladite chambre de détonation 3 comprend, à l'extrémité amont 5 (relativement audit sens E), au niveau de l'entrée, une surface transversale appelée fond d'injection 10. Cette surface est transversale par rapport à la direction longitudinale de la chambre 3, qui est définie de façon générale selon la direction générale d'écoulement E des gaz. Ce fond d'injection 10 présente une longueur L1 qui est définie selon une ligne ouverte, de manière à former une chambre de détonation 3 présentant une forme allongée dans le plan transversal, et non pas annulaire. Quant à la largeur L2 du fond d'injection 10, elle peut être variable, mais est de préférence constante.

Ce fond d'injection 10 amont peut présenter une longueur de forme ouverte quelconque, en particulier rectiligne ou courbe, mais non fermée à la différence d'une chambre annulaire usuelle. La chambre 3 comprend de plus deux parois 12 et 13, par exemple parallèles, qui s'étendent longitudinalement de part et d'autre de ce fond d'injection 10. La chambre 3 présente ainsi une forme géométrique à trois dimensions ayant des faces (planes ou non), en particulier six faces, qui se rencontrent au niveau d'arêtes. Sur les exemples des figures 1 et 2, la chambre 3 comprend les faces suivantes:
- le fond d'injection 10 à l'extrémité amont 5 ;
- une face ouverte 14 à l'extrémité aval 9 ;
- les deux parois 1 2 et 13 ; et
- deux faces 15 et 16 aux deux extrémités du fond d'injection 10 le long de la ligne ouverte.

La chambre 3 peut notamment présenter la forme générale d'un hexaèdre quelconque (polyèdre à six faces planes), et en particulier celle d'un parallélépipède (hexaèdre à faces parallèles deux à deux).

Dans l'exemple de la figure 1, la longueur du fond d'injection 10 est définie selon une ligne courbe, comme illustré par exemple par une ligne 17.

En outre, dans le cas d'un fond d'injection 10 rectangulaire qui est donc défini selon une ligne droite (selon la longueur L1 du rectangle, comme illustré par une ligne 18), la chambre 3 peut, par exemple, prendre la forme d'un parallélépipède rectangle (dont toutes les faces sont planes et sont des rectangles), comme représenté sur la figure 2.

Ainsi, le moteur 1 conforme à l'invention comprend une chambre de détonation 3 qui ne présente pas (et n'est pas limitée à) une forme annulaire, mais peut présenter de multiples autres formes différentes.

Par ailleurs, selon l'invention, ledit système d'injection 4 est agencé de manière à injecter le mélange combustible/oxydant au niveau d'au moins un tronçon 20 dudit d'injection 10, comme représenté sur la figure 2. Ce système d'injection 4 notamment est formé de manière à générer (conjointement avec l'onde amorcée par les moyens d'amorçage 8) des conditions locales particulières, qui permettent de créer dans la chambre de détonation 3 le train d'ondes de détonation (amorcées naturellement). Les conditions locales particulières permettant de créer ce train d'ondes de détonation sont susceptibles d'être définies par un homme du métier, notamment de façon empirique.

Les moyens d'amorçage 8 usuels (par exemple un fil à exploser ou un tube de pré-détonation) sont agencés dans ladite chambre de détonation 3 dans le but d'amorcer dans le mélange détonant, une onde de détonation 8 qui se propage alors dans ledit mélange selon la direction longitudinale (flèche F) du fond d'injection 10 et est à l'origine d'ondes de détonation successives 22 amorcées automatiquement. Cette onde se propage dans le mélange détonant frais le long du fond d'injection 10, tandis que les gaz chauds qu'elle produit se détendent dans le reste de la chambre 3 (comme montré par des lignes 23 illustrant la détente des produits de détonation) et vont être évacués par l'extrémité ouverte 9 de la chambre de détonation 3. Ces gaz chauds qui se détendent vers l'extrémité ouverte 9 de la chambre 3 peuvent être utilisés de différentes façons, notamment en étant accélérés par une tuyère pour obtenir une poussée.

Au-delà de la zone (ou tronçon) d'injection 20, le long du fond d'injection 10, l'onde de détonation dégénère en une simple onde de compression 24, comme représenté sur la figure 2. Sur l'exemple de cette figure 2, on a prévu différentes zones d'injection 25, dont seulement certaines sont alimentées (flèches 26).

Dans le cadre de la présente invention, les extrémités 15 et 16 de la chambre de détonation 3 peuvent être ouvertes ou fermées, indépendamment l'une de l'autre. En outre, l'initiation (mise en oeuvre par les moyens d'amorçage 8) peut être située n'importe où le long du fond d'injection 10.

Grâce à la multitude de formes envisageables de la chambre de détonation 3, conforme à l'invention, on augmente considérablement les applications possibles du moteur 1, par rapport à un moteur usuel à chambre de détonation exclusivement annulaire.

Ainsi, de nombreuses applications peuvent être envisagées, notamment pour des moteurs fusées à ergols liquides, des systèmes à turbomachine ou encore des statoréacteurs.

Par ailleurs, le système d'injection 4 injecte le combustible usuel séparément de l'air. On ne prévoit donc pas d'injection en pré-mélange, ce qui permet d'éviter tout risque d'inflammation en amont de la chambre de détonation 3. En outre, dans le cas d'un combustible stockable tel qu'un hydrocarbure liquide, on peut également prévoir un circuit régénératif (non représenté) permettant de prévaporiser le combustible (avant son injection) et d'obtenir ainsi des conditions de mélange et de détonation satisfaisantes sans pré-mélange. De préférence, ce circuit régénératif (ou de refroidissement), dans lequel circule du combustible, s'étend le long d'au moins une paroi latérale de ladite chambre de détonation 3, sur au moins une partie de sa longueur.

Dans un mode de réalisation particulier, ledit système d'injection 4 est susceptible de réaliser l'injection sur une longueur variable le long dudit fond d'injection 10. On peut ainsi prévoir différentes zones d'injection 25 le long du fond d'injection 10, dont un nombre variable sont susceptibles d'être alimentées (flèches 26 de la figure 2). On peut prévoir des moyens d'injection séparés pour ces différentes zones d'injection 25.

Grâce à ce mode de réalisation particulier, on peut alimenter une partie plus ou moins importante de la chambre de détonation 3 en combustible et/ou en comburant pour moduler la poussée (pour un système aérobie, on prévoit uniquement une modulation d'injection de combustible).

Si on monte deux moteurs 1 de ce type sur un engin volant de manière à générer des propulsions respectivement de part et d'autre d'un axe de rotation, on peut générer une rotation de l'engin volant autour de cet axe en réalisant une injection dissymétrique. A titre d'illustration, on peut monter un tel moteur 1 sur chacune des ailes d'un avion (non représenté), le fond d'injection 10 de la chambre 3 étant défini à chaque fois le long du bord de fuite de l'aile correspondante, et créer un moment de lacet en réalisant des injections différentes sur ces deux moteurs 1. On peut ainsi créer une possibilité de contribution au contrôle d'un engin volant par modulation d'injection dissymétrique, en prévoyant un système propulsif 2 comprenant une pluralité de moteurs 1 (à longueur d'alimentation variable).

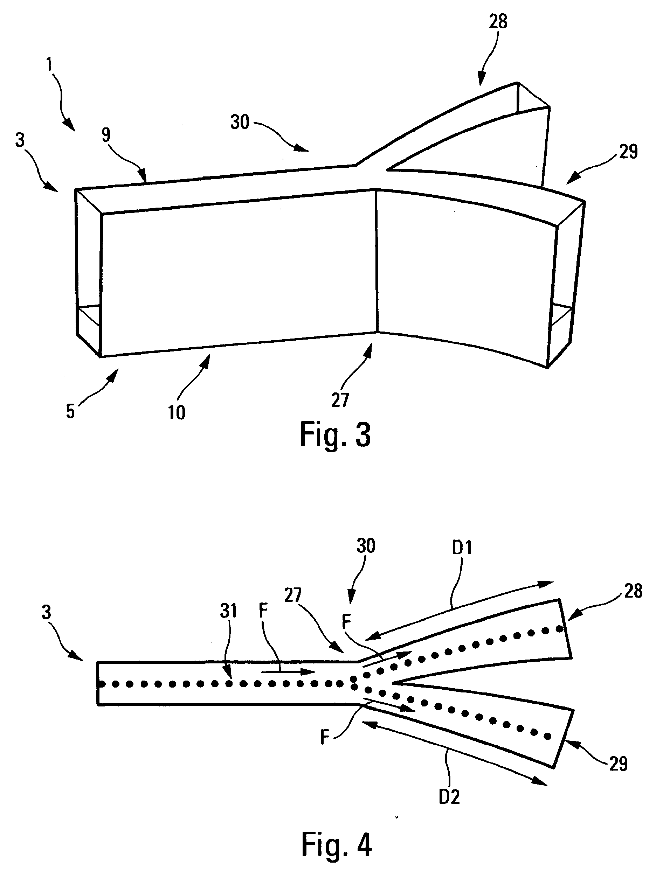

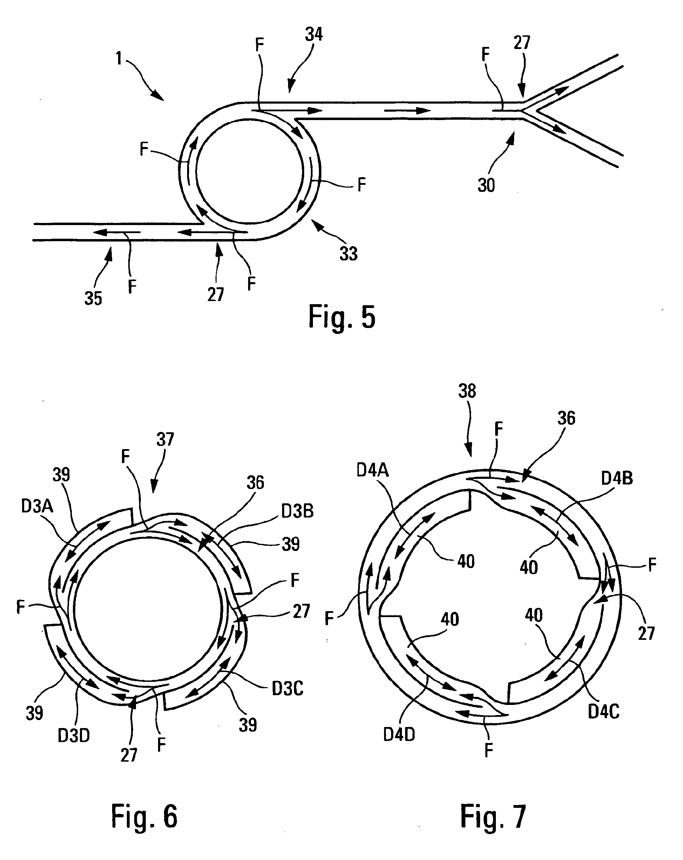

Par ailleurs, dans un mode de réalisation particulier, ladite chambre de détonation 3 présente une bifurcation 27 au niveau du fond d'injection 10, comme représenté sur les figures 3 et 4 de manière à créer, au-delà de cette bifurcation 27, au moins deux branches allongées 28 et 29 et à former ainsi une chambre à bifurcation 30. Chacune de ces branches 28 et 29 est alimentée en mélange détonant par ledit système d'injection 4, comme illustré sur la figure 4 par des suites 31 de points représentant des lignes d'injection. Ce mode de réalisation particulier permet de créer deux lignes propulsives (ou plus) par propagation des ondes dans les deux branches 28 et 29 (ou plus). Bien entendu chaque moteur 1 comprend, en plus d'une chambre de détonation, tous les moyens précités, notamment le système d'injection 4 et les moyens d'amorçage 8, qui sont nécessaires à son fonctionnement, même si pour des raisons de simplification du dessin, on a essentiellement représenté les chambres sur les figures 3 et 4, ainsi que sur les figures 5 à 7. Sur les figures 4 à 7, on a indiqué le sens de déplacement des ondes de détonation 22 à l'aide de flèches F.

Dans le cas d'une chambre à bifurcation 30, le système d'injection 4 peut alimenter chacune des branches 28 et 29 sur une longueur plus ou moins importante, comme illustré par des doubles flèches D1 et D2 sur la figure 4, et offrir ainsi une possibilité de réaliser un contrôle vectoriel de la poussée par dissymétrisation des conditions d'injection (donc sans tuyère braquable) de l'engin volant équipé dudit moteur 1. Ces branches 28 et 29 peuvent donc être alimentées sur des longueurs variables dans le temps et indépendamment l'une des l'autre.

Par ailleurs, dans un mode de réalisation particulier, représenté sur la figure 5, ledit moteur 1 peut comporter, en plus d'une chambre à bifurcation 30, une chambre de détonation annulaire 33 de type usuelle. De plus, ladite chambre à bifurcation 30 est reliée à ladite chambre annulaire 33 (par une liaison plus ou moins longue) de manière à obtenir une chambre hybride 34. Ce mode de réalisation particulier combine ainsi les avantages d'une chambre annulaire (stabilité assurée du fonctionnement) et ceux d'une chambre à bifurcation :
- fonctionnement optimal sur une large plage de conditions (poussée/richesse) : on alimente une part plus ou moins importante de longueur de chambre et le reste est seulement alimenté par le comburant (air a priori) ;
- limitation du choc de démarrage : on démarre uniquement la chambre annulaire qui est agencée en amont ; et
- propulsion distribuée (et contrôle distribué).

De plus, ladite chambre annulaire 33 de cette chambre hybride 34 peut également être reliée, via une ou plusieurs bifurcations 27, à une ou plusieurs extensions 35 (ou branches) supplémentaires.

En outre, dans un mode de réalisation particulier, représenté sur les figures 6 et 7, on peut prévoir une chambre hybride 37, 38 qui prend la forme d'une chambre de détonation annulaire 36, pourvue (via des bifurcations 27) d'extensions 39, 40. Ces extensions 39, 40 sont concentriques par rapport à la chambre annulaire 36. De préférence, ces extensions 39, 40, par exemple au nombre de quatre, sont uniformément réparties sur la périphérie (interne ou externe) de la chambre annulaire 36 et peuvent présenter des longueurs d'alimentation variables, comme illustré par des flèches D3A à D3B et D4A à D4B. Dans un mode de réalisation particulier, pour obtenir une variation de la longueur d'alimentation en combustible, on peut par exemple prévoir un disque qui tourne entre le système d'alimentation 4 en combustible et la chambre de détonation 3 et qui découvre, plus ou moins, des lumières oblongues prévues dans un collecteur de combustible.

Dans la variante de réalisation particulière de la figure 6, les extensions concentriques 39 sont agencées radialement à l'intérieur de ladite chambre de détonation annulaire 36, tandis que, dans la variante de réalisation de la figure 7, les extensions concentriques 40 sont agencées radialement à l'extérieur de ladite chambre de détonation annulaire 36.

Il est alors aisé de moduler la poussée de façon continue, en alimentant une longueur plus ou moins importante (D3A à D3B et D4A à D4B) de ces extensions 39, 40 en combustible (ou en combustible et comburant pour un système fusée). De la même façon, on peut assurer facilement un contrôle de l'orientation de la poussée (pour un statoréacteur ou une fusée).

Une telle chambre hydride 37, 38 peut notamment être utilisée pour remplacer une chambre annulaire simple, ou des chambres annulaires concentriques, dans un statoréacteur, une turbomachine ou un moteur fusée.

## Revendications

1. Moteur à onde de détonation continue fonctionnant avec un mélange combustible/oxydant détonant et comportant :
- au moins une chambre de détonation (3) ;
- un système d'injection (4) pour injecter de façon continue le mélange détonant dans ladite chambre de détonation au niveau d'une extrémité amont (5), ladite chambre de détonation (3) comprenant un fond d'injection (10) à ladite extrémité amont, ainsi que deux parois (12, 13) qui s'étendent de part et d'autre de ce fond d'injection ; et
- des moyens d'amorçage (8) qui sont agencés dans ladite chambre de détonation (3), pour amorcer dans le mélange détonant, une onde de détonation (22) qui se propage alors dans ledit mélange et est à l'origine d'ondes de détonation successives auto-initiées, de manière à générer une production continue de gaz chauds, s'échappant par une extrémité aval (9) de ladite chambre de détonation (3),
**caractérisé en ce que** ladite chambre de détonation (3) comprend un fond d'injection (10) dont la longueur est définie selon une ligne ouverte (17, 18), de manière à former une chambre de détonation (3) présentant une forme allongée dans un plan transversal, et **en ce que** ledit système d'injection (4) est agencé de manière à injecter le mélange combustible/oxydant dans ladite chambre de détonation (3) au niveau d'au moins un tronçon (20) dudit fond d'injection (10).

2. Moteur selon la revendication 1,
**caractérisé en ce que** ledit fond d'injection (10) est défini selon une ligne courbe ouverte (17).

3. Moteur selon la revendication 1,
**caractérisé en ce que** ledit fond d'injection (3) est défini selon une ligne droite ouverte (18).

4. Moteur selon l'une des revendications 1 et 3,
**caractérisé en ce que** ledit système d'injection (4) est susceptible de réaliser l'injection sur une longueur variable.

5. Moteur selon l'une quelconque des revendications précédentes,
**caractérisé en ce qu'**il comprend au moins un circuit de refroidissement de ladite chambre de détonation dans lequel peut circuler du combustible avant son injection dans cette dernière.

6. Moteur selon la revendication 5,
**caractérisé en ce que** ledit circuit de refroidissement s'étend le long d'au moins une paroi latérale de ladite chambre de détonation, sur au moins une partie de sa longueur.

7. Moteur selon l'une quelconque des revendications précédentes,
**caractérisé en ce que** ladite chambre de détonation (30) présente au niveau du fond d'injection (10) une bifurcation (27) permettant de créer, au-delà de cette dernière, au moins deux branches allongées (28, 29), dont chacune est susceptible d'être alimentée en mélange détonant par ledit système d'injection (4).

8. Moteur selon la revendication 7,
**caractérisé en ce que** ledit système d'injection (4) est susceptible d'alimenter ces branches (28, 29) sur des longueurs différentes variables dans le temps et indépendamment l'une de l'autre.

9. Moteur selon l'une des revendications 7 et 8,
**caractérisé en ce qu'**il comporte, de plus, une chambre de détonation annulaire (33, 36), et **en ce que** ladite chambre à bifurcation (30) est reliée à ladite chambre annulaire (33, 36) de manière à former une chambre hybride (34, 37, 38).

10. Moteur selon la revendication 9,
**caractérisé en ce que** ladite chambre hybride (37, 38) prend la forme d'une chambre de détonation annulaire (36), pourvue d'extensions concentriques (39, 40) à longueurs d'alimentation variables.

11. Moteur selon la revendication 10,
**caractérisé en ce que** lesdites extensions concentriques (39) sont agencées à l'extérieur de ladite chambre de détonation annulaire (36).

12. Moteur selon la revendication 10,
**caractérisé en ce que** lesdites extensions concentriques (40) sont agencées à l'intérieur de ladite chambre de détonation annulaire (36).

13. Système de génération d'énergie, en particulier turbine à gaz,
**caractérisé en ce qu'**il est pourvu d'au moins un moteur (1) tel que celui spécifié sous l'une quelconque des revendications 1 à 12.

14. Système propulsif pour engin volant, en particulier du type statoréacteur, du type turbomachine ou du type fusée,
**caractérisé en ce qu'**il est pourvu d'au moins un moteur (1) tel que celui spécifié sous l'une quelconque des revendications 1 à 12.

15. Système propulsif selon la revendication 14,
**caractérisé en ce qu'**il est pourvu d'au moins deux moteurs (1), dont chacun comprend un système d'injection (4) susceptible de moduler l'injection.

16. Engin volant,
**caractérisé en ce qu'**il est pourvu d'au moins un système propulsif (2) tel que celui spécifié sous l'une des revendications 14 et 15.

## Patentansprüche

1. Motor mit kontinuierlicher Zündwelle, der mit einem zündenden Kraftstoff/Oxidationsmittel-Gemisch arbeitet und Folgendes aufweist:
- mindestens eine Zündkammer, (3),
- ein Einspritzsystem (4) zum kontinuierlichen Einspritzen des Zündgemischs in die Zündkammer auf dem Niveau eines stromaufwärtigen Endes (5), wobei die Zündkammer (3) einen Einspritzboden (10) an dem stromaufwärtigen Ende aufweist, sowie zwei Wände (12, 13), die sich zu beiden Seiten dieses Einspritzbodens erstrecken, und
- Zündmittel (8), die in der Zündkammer (3) eingerichtet sind, um in dem Zündgemisch eine Zündwelle (22) zu zünden, die sich in dem Gemisch ausbreitet und der Ursprung selbst ausgelöster aufeinanderfolgender Zündwellen ist, so dass eine ununterbrochene Produktion heißer Gase erzeugt wird, die durch ein stromabwärtiges Ende (9) aus der Zündkammer (3) entweichen,
**dadurch gekennzeichnet, dass** die Zündkammer (3) einen Einspritzboden (10) aufweist, dessen Länge entlang einer offenen Linie (17, 18) derart definiert ist, dass eine Zündkammer (3) ausgebildet wird, die eine längliche Form in einer Querebene aufweist, und dass das Einspritzsystem (4) derart eingerichtet ist, dass das Kraftstoff/Oxidationsmittel-Gemisch in die Zündkammer (3) auf dem Niveau mindestens eines Abschnitts (20) des Einspritzbodens (10) eingespritzt wird.

2. Motor nach Anspruch 1, **dadurch gekennzeichnet, dass** der Einspritzboden (10) entlang einer offenen gebogenen Linie (17) definiert ist.

3. Motor nach Anspruch 1, **dadurch gekennzeichnet, dass** der Einspritzboden (3) entlang einer offenen geraden Linie (18) definiert ist.

4. Motor nach einem der Ansprüche 1 und 3, **dadurch gekennzeichnet, dass** das Einspritzsystem (4) das Einspritzen auf einer variablen Länge ausführen kann.

5. Motor nach einem der vorhergehenden Ansprüche, **dadurch gekennzeichnet, dass** er mindestens einen Kühlkreislauf der Zündkammer aufweist, in welchem Kraftstoff vor seinem Einspritzen in diese Letztere zirkulieren kann.

6. Motor nach Anspruch 5, **dadurch gekennzeichnet, dass** sich der Kühlkreislauf entlang mindestens einer Seitenwand der Zündkammer auf mindestens einem Teil ihrer Länge erstreckt.

7. Motor nach einem der vorhergehenden Ansprüche, **dadurch gekennzeichnet, dass** die Zündkammer (30) auf dem Niveau des Einspritzbodens (10) eine Verzweigung (27) aufweist, die es erlaubt, über diese Letztere hinaus mindestens zwei längliche Schenkel (28, 29) zu bilden, von welchen jeder mit Zündgemisch durch das Einspritzsystem (4) versorgt werden kann.

8. Motor nach Anspruch 7, **dadurch gekennzeichnet, dass** das Einspritzsystem (4) diese Schenkel (28, 29) auf zeitlich unterschiedlichen variablen Längen und unabhängig voneinander versorgen kann.

9. Motor nach einem der Ansprüche 7 und 8 **dadurch gekennzeichnet, dass** er außerdem eine ringförmige Zündkammer (33, 36) aufweist, und dass die Kammer mit Verzweigung (30) mit der ringförmigen Kammer (33, 36) derart verbunden ist, dass eine Hybridkammer (34, 37, 38) gebildet wird.

10. Motor nach Anspruch 9, **dadurch gekennzeichnet, dass** die Hybridkammer (37, 38) die Form einer ringförmigen Zündkammer (36) annimmt, die mit konzentrischen Erweiterungen (39, 40) mit variablen Versorgungslängen versehen ist.

11. Motor nach Anspruch 10, **dadurch gekennzeichnet, dass** die konzentrischen Erweiterungen (39) außerhalb der ringförmigen Zündkammer (36) eingerichtet sind.

12. Motor nach Anspruch 10, **dadurch gekennzeichnet, dass** die konzentrischen Erweiterungen (40) im Inneren der ringförmigen Zündkammer (36) eingerichtet sind.

13. Energieerzeugungssystem, insbesondere Gasturbine, **dadurch gekennzeichnet, dass** es mit mindestens einem Motor (1) wie dem, der unter einem der Ansprüche 1 bis 12 spezifiziert ist, versehen ist.

14. Antriebssystem für Flugmaschine, insbesondere des Typs Staustrahl-Triebwerk, des Typs Turbotriebwerk oder Rakete, **dadurch gekennzeichnet, dass** es mit mindestens einem Motor (1) wie dem, der unter einem der Ansprüche 1 bis 12 spezifiziert ist, versehen ist.

15. Antriebssystem nach Anspruch 14, **dadurch gekennzeichnet, dass** es mit mindestens zwei Motoren (1) versehen ist, von welchen jeder ein Einspritzsystem (4) aufweist, das die Einspritzung modulieren kann.

16. Flugmaschine, **dadurch gekennzeichnet, dass** sie mit mindestens einem Antriebssystem (2) wie dem, das unter einem der Ansprüche 14 und 15 spezifiziert ist, versehen ist.

## Claims

1. Continuous detonation wave engine operating with a detonating fuel/oxidant mixture and comprising:
- at least one detonation chamber (3);
- an injection system (4) for continuously injecting the detonating mixture into said detonation chamber at an upstream end (5), said detonation chamber (3) comprising an injection base (10) at said upstream end, and two walls (12, 13) which extend on either side of this injection base; and
- initiation means (8) which are disposed in said detonation chamber (3), to initiate in the detonating mixture a detonation wave (22) which is then propagated in said mixture and is the cause of successive self-initiated detonation waves, so as to generate continuous production of hot gases, escaping through an upstream end (9) of said detonation chamber (3), **characterized in that** said detonation chamber (3) comprises an injection base (10) of which the length is defined by an open line (17, 18), so as to form a detonation chamber (3) having an elongate form in a transverse plane, and **in that** said injection system (4) is disposed so as to inject the fuel/oxidant mixture into said detonation chamber (3) at at least one portion (20) of said injection base (10).

2. Engine according to claim 1, **characterized in that** said injection base (10) is defined by an open curved line (17).

3. Engine according to claim 1, **characterized in that** said injection base (3) is defined by an open straight line (18).

4. Engine according to either claim 1 or claim 3, **characterized in that** said injection system (4) is capable of producing the injection over a variable length.

5. Engine according to any one of the preceding claims, **characterized in that** it comprises at least one cooling circuit for said detonation chamber, in which cooling circuit fuel can circulate before being injected into said detonation chamber.

6. Engine according to claim 5, **characterized in that** said cooling circuit extends along at least one side wall of said detonation chamber, over at least a portion of its length.

7. Engine according to any one of the preceding claims, **characterized in that** said detonation chamber (30) has a bifurcation (27) at the injection base (10), allowing at least two elongate branches (28, 29) to be created beyond said bifurcation, each of which can be supplied with detonating mixture by said injection system (4).

8. Engine according to claim 7, **characterized in that** said injection system (4) is capable of supplying these branches (28, 29) over different lengths which can vary over time and independently of one another.

9. Engine according to either claim 7 or claim 8, **characterized in that** it further comprises an annular detonation chamber (33, 36) and **in that** said bifurcation chamber (30) is connected at said annular chamber (33, 36) so as to form a hybrid chamber (34, 37, 38).

10. Engine according to claim 9, **characterized in that** said hybrid chamber (37, 38) takes the form of an annular detonation chamber (36) provided with concentric extensions (39, 40) of variable feed lengths.

11. Engine according to claim 10, **characterized in that** said concentric extensions (39) are disposed outside said annular detonation chamber (36).

12. Engine according to claim 10, **characterized in that** said concentric extensions (40) are disposed inside said annular detonation chamber (36).

13. Energy generation system, in particular a gas turbine, **characterized in that** it is provided with at least one engine (1) such as that specified in any one of claims 1 to 12.

14. Propulsive system for flying craft, in particular of the ramjet, turbine engine or rocket type, **characterized in that** it is provided with at least one engine (1) such as that specified in any one of claims 1 to 12.

15. Propulsive system according to claim 14, **characterized in that** it is provided with at least two engines (1), each of which comprises an injection system (4) capable of modulating the injection.

16. Flying craft, **characterized in that** it is provided with at least one propulsive system (2) such as that specified in either claim 14 or claim 15.
